# EUROPEAN PATENT APPLICATION

(11) **EP 2 955 161 A1**
(43) Date of publication of application: **16.12.2015**
(21) Application number: 12889400.3
(22) Date of filing: 03.12.2012
(51) Int. Cl.: C02F 1/58, C02F 1/52

(54) **METHOD FOR TREATING SULPHATE-LADEN WASTE AND FOR RECYCLING THE RESULTING SLUDGE**

(71) Applicant: Arellano Ortiz, Jordi, 08004 Barcelona (ES)
(72) Inventor: Arellano Ortiz, Jordi, 08004 Barcelona (ES)
(74) Representative: Espiell Volart, Eduardo Maria
(86) International application number: PCT/ES2012/000307
(87) International publication number: WO 2014/087026

(57) **Abstract**

The invention relates to a method for treating waste containing sulphates and recycling the resulting by-products. In a previous treatment phase (2), calcium hydroxide, calcium oxide and/or calcium carbonate are added, thereby producing a precipitate that contains hydrated calcium sulphate or calcium sulphate. Subsequently, tricalcium aluminate (3CaO Al₂O₃) is added in a main reaction (4), the sulphates being eliminated by means of precipitation, with the production of a by-product incorporating the precipitates. The by-product is a sludge containing ettringite and/or calcium sulphoaluminate which is recycled as a component for the production of cement and/or as a neutraliser/coagulant in a wastewater purification plant. In both uses, the method significantly improves the characteristics of the cement and the functionality of the neutraliser/coagulant. The method dispenses with the need for toxic heavy metals and provides a solution to the inconvenient aspects of current precipitation techniques such as not being able to lower the level of sulphates below 1200 ppm and the high cost of the reagents.

## Description

### Technical sphere of the invention

This invention refers to the treatment of wastes, either solid, liquid or gaseous, containing sulphates, for example waste water with sulphate content above the limit allowed by country's current legislation. Specifically, this invention refers to a method of treating wastes with high sulphate content as well as the valorisation of the sludge obtained.

### Background of the invention

Sulphate treatment processes can be classified into four categories:
- Chemical treatment with mineral precipitation
- Membranes
- Ion exchange
- Biological removal of sulphates

There are various methods of chemical treatment: calcium carbonate/lime; barium salts; SAVMIN method; CESR method.

In neutralisation "by calcium carbonate/lime", neutralisation is performed with calcium hydroxide or carbonate, precipitating gypsum or anhydrite. This is an inexpensive system, but given the solubility of calcium sulphate, the concentration of sulphate cannot be reduced below 1200-1500 ppm. The corresponding reactions are:

Ca(OH)₂ + H₂SO₄ → CaSO₄.2H₂O

CaCO₃ + H₂SO₄ + H₂O → CaSO₄.2H₂O + CO₂

If barium salts are used, neutralisation is performed by barium carbonate, hydroxide or sulphide salts, obtaining insoluble barium sulphate. The levels of sulphate can be reduced to some 200 ppm. This is a relatively expensive system given the cost of the reagents. The corresponding reactions are:

BaCO₃ + H₂SO₄ → BaSO₄ + H₂CO₃

Ba(OH)₂ + H₂SO₄ → BaSO₄ + 2H₂O

BaS + H₂SO₄ → BaSO₄ + H₂S

The SAVMIN method consists of the removal of sulphates by precipitation of ettringite. This is achieved by reaction of aluminium hydroxide with the sulphate ion in the presence of lime. Low final levels of sulphates are obtained but for water with low levels of sulphates. However, the investment costs are also high. The corresponding reactions are:

3SO₄H₂ + 6Ca(OH)₂ + 2Al(OH)₃ + 19H₂O → 3CaO.3CaSO₄.Al₂O₃.31 H₂O

The CESR method also uses removal of sulphates by precipitation of ettringite but in this case using calcium aluminate as the reagent. The sulphate levels are reduced below 200 ppm but the production cost is high. The process reaction can be written as:

3SO₄H₂ + 5CaO + CaAl₂O₄ + 28H₂O → 3CaO.3CaSO₄.Al₂O₃.31H₂O

Membranes are used in two major water treatment processes: reverse osmosis and electrodialysis. These processes achieve high purity drinking water. However, investment, maintenance and operating costs are high. Furthermore, these systems continuously generate concentrated saline, more or less concentrated depending on the initial sulphate concentrations and the required quality level, and are expensive and difficult to manage.

Another method for removing sulphates is by the use of ion exchange resins. These are composed of a high concentration of polar groups, acid or basic, included in a synthetic polymer matrix (styrene resins, acrylic resins, etc.) and act by absorbing ions from the solution (generally water) and releasing equivalent amounts of other ions. The main advantage of ion exchange resins is that it is possible to recover their original exchange capacity through treatment with a regenerating solution.

Ion exchange resins have a fixed radical and a mobile ion or replacement ion. The mobile ion is the ion that is exchanged for the ions that are to be removed from the solution and this exchange only operates between ions of equal electric charge: cations for cations and anions for anions.

Ion exchange resins generally operate in columns in order to encourage the exchange process, similar to distillation or tray distillation. The exchange reaction takes place in the resin bed, generally toward the lower levels.

Anionic resins of weak bases very efficiently remove anions from strong acids such as sulphates, nitrates and chlorides. This is a highly efficient method but of high cost, both in maintenance and management, also generating significant amounts of waste.

Biological treatments for sulphate removal are an alternative to the various methods described above. The main technologies currently used are: bioreactor, artificial wetlands for treatment of waste water, alkaline producing systems (anaerobic drainage through limestone and vertical flow systems) and vertical reactive barriers. All of these, except the bioreactor, are passive treatment systems and therefore of low treatment speed. They are affected by the use of substrates with the presence of other anaerobic bacteria, with toxicity due to the presence of H₂S and dissolved metals, which even in trace levels seem to inhibit sulphate reduction.

Although the methods described above work correctly, they have some drawbacks individually or together that limit their application in certain fields.

In this sense, the techniques of membranes and ion exchange resins produce excellent quality but low yield and at high cost. The biological techniques are generally very slow and demanding in the maintenance of bacterial strains.

Thus the most suitable candidates are precipitation techniques. Among these, precipitation by calcium carbonate and/or lime is an effective system but with the drawback that with the solubility of the precipitated gypsum, the level of sulphates cannot be reduced below 1200 ppm. Nevertheless, given the low cost, they can be used as a preliminary treatment. Precipitation with barium salts has the drawback of high cost of the reagents in addition to the risk of using a highly toxic heavy metal, which is not recommended for general use.

The other two methods, SAVMIN and CESR have high investment and/or operation costs, either because of the complexity of the system or because of the expense of the reagents.

The aim of this invention is to simultaneously solve all these drawbacks.

### Description of the invention

To that end, the object of this invention is a method for treating wastes containing sulphates, either solid, liquid or gaseous, and valorisation of the by-products obtained. This new method is characterised in that it comprises one phase, or main reaction, of adding modifiable amounts of tricalcium aluminate (3CaO.Al₂O₃) (C3A), thereby removing the sulphates by precipitation and obtaining a by-product in the precipitate.

The method preferably comprises a prior treatment phase of the wastes in which modifiable amounts of calcium hydroxide, calcium oxide and/or calcium carbonate are added prior to the reaction, obtaining a precipitate containing calcium sulphate or hydrated calcium sulphate.

The by-product may be contained in a sludge containing ettringite or another calcium sulphoaluminate phase.

In this case, the invention includes the possibility of an additional phase of conditioning this sludge.

This sludge can be valorised as a component for the manufacture of cement or alternatively or additionally, as a coagulant-neutraliser in a waste water purification plant. The inventors have observed that, surprisingly, both the properties of the cement and the functionality of the coagulant-neutraliser are notably improved.

After many trials, the inventors have found that the mixture provided of tricalcium aluminate with specific amounts of calcium sources improve the precipitation of sulphates. This at least partially accounts for the excellent precipitation and the good properties of the sludge as a component of cement and coagulant.

The method proposed uses tricalcium aluminate as a reagent in place of calcium aluminate of the CESR method or aluminium hydroxide of the SAVMIN method. The advantages are in the better reactivity and improved economy of the product compared to the CESR method. Calcium aluminate is the main component of aluminous cement, which is synthesised by melting at temperatures in the order of 1600 °C, whereas tricalcium aluminate is synthesised at temperatures of some 300 °C lower, that is at 1300 °C and by solid state synthesis. This implies a lower cost for the product. Also, the reactivity of tricalcium aluminate is much higher as it reacts with sulphates as soon as it comes into contact with them, and is therefore used as part of the reaction of the delaying process of Portland cement.

In comparison, the SAVMIN process is a much more complex process as can be seen in the bibliography on the subject and in the description of the corresponding patent and in the cost of the reagent, which in this case must be a high reactivity aluminium hydroxide such as amorphous aluminium hydroxide.

This invention uses a much cheaper product and one that has higher reactivity; this implies lower complexity of the process and lower cost, both of the product and in the investment necessary for its application and maintenance.

As a result of this, this invention enables the effective solution to the drawbacks mentioned previously.

### Brief description of the invention

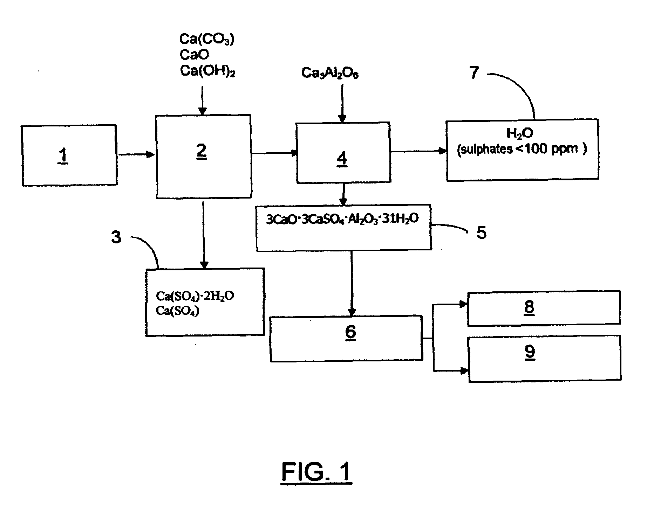

A detailed description of the preferred but not exclusive embodiment of the method of treatment of sulphate-containing wastes and the valorisation of the by-products obtained that is the object of the invention is presented below. In order to facilitate understanding, it is accompanied by a figure illustrating a non-limiting example of one method of embodiment of this invention. The single Fig. 1 shows a schematic flow diagram of the method of the invention.

### Detailed description of the figures

The method of treating sulphate-containing wastes and the valorisation of the by-products obtained is described below. In order to obtain tricalcium aluminate (C3A), the following are used as raw materials:
- Any product (natural synthetic or waste) in which the CaO content, after calcination, is higher than 25% such as, for example, calcium carbonate.
- Any product (natural synthetic or waste) in which the Al2O3 content, after calcination, is higher than 25% such as, for example, alumina.

The process consists of weighing the raw materials and mixing them thoroughly in order to obtain a mixture with the stoichiometric proportions of at least 50% tricalcium aluminate, for example mixing 74.6 g of calcium carbonate with 25.4 g of alumina.

The mixture is heated to a high temperature of between 300 °C and 1700 °C, for example to 1350 °C, in order for the reaction to take place between the components and to obtain tricalcium aluminate.

The product obtained is crushed until it fully passes through a 5 mm mesh, for example when the mean particle size is 0.050 mm.

This invention proposes to apply C3A in the treatment of sulphate-containing water, for example water with sulphate content above the limit allowed by country's current legislation. For example, in Spain, waste water with sulphate content above 1000 ppm. Application of the product in suitable amounts to water with high levels of sulphate reduces the proportion of sulphate to below the maximum level allowed. It is also applicable for making water suitable for drinking where in this case the maximum recommended limit for Spain is 250 ppm.

In water with sulphate content (above the limit of solubility of calcium sulphate dihydrate) (very high), calcium hydroxide or another substance that precipitates the sulphate ion can be used for a first precipitation of sulphates and subsequently C3A is used to take the sulphate content to levels below the maximum established by the country's environmental laws. In certain cases, a source of calcium ions mixed with the C3A can also be used to improve the process yield.

Removal of sulphates by precipitation. In this case the sulphates are also removed by precipitation of ettringite but the reagent used is tricalcium aluminate (3CaO.Al₂O₃) (C3A).

The method consists of a prior treatment with calcium carbonate, calcium oxide and/or calcium hydroxide with precipitation of gypsum or anhydrite, depending on the conditions of composition and/or temperature of the reactor. Keeping a basic pH, the C3A is added to react with the sulphate ions and to precipitate the ettringite.

This process is shown in the flow diagram of Fig. 1.

The liquid containing sulphates (1) is subjected to a prior treatment (2) where the following reaction take place:

Ca(OH)₂ + H₂SO₄ → CaSO₄.2H₂O

CaCO₃ + H₂SO₄ + H₂O → CaSO₄.2H₂O + CO₂

obtaining a precipitate (3).

Next, the main reaction (4) takes place with the sulphate:

3H₂SO₄ + 3Ca(OH)₂ + 3CaO.Al₂O₃ + 25H₂O → 3CaO.3CaSO₄.Al₂O₃.31H₂O

with the production of ettringite (3CaO.3CaSO₄.Al₂O₃.31H₂O), incorporated in the sludge (5).

The water (7) obtained in the main reaction of the precipitation of ettringite is water with a low sulphate concentration, for example below 100 ppm, and suitable for discharge or as drinking water.

Application of C3A is proposed for the treatment of water containing sulphates, for example with sulphate content above the limit allowed by current legislation. For example in Spain, with sulphate content above 1000 ppm. Through the application of the product in suitable amounts to water with high sulphate levels, the proportion of sulphate is reduced to levels below the maximum allowed values. The method is also applicable in the case of making water safe to drink, in which case the recommended limit for Spain is 250 ppm.

In water with very high sulphate content (above the solubility limit of calcium sulphate dihydrate), calcium hydroxide or some other substance that precipitates the sulphate ion can be first used for a first precipitation of sulphates and subsequently C3A is used to take the sulphate level to below the maximum established by the country's environmental laws and to the product of solubility of gypsum. In certain cases a source of calcium ions mixed with the C3A may also be used to improve the process yield. g/m³

For example, in the treatment of water (1) with a sulphate content of 2,650 ppm, 2,800 g/m³ of C3A dissolved in the water was used, reducing the sulphate content to < 100 ppm.

In another case of water (1) with very high sulphate level, Ca(OH)₂ was used first and subsequently C3A was applied. According to the invention, the sludge obtained in the precipitation of the sulphates with C3A can be used.

After the precipitation of the sulphates with the application of C3A, a sludge (5) rich in sulphates, calcium and aluminium (ettringite) is obtained. This sludge, suitably conditioned in (6), can be used as a component in the process of the manufacture of expansive cement (8).

Because of its composition, the suitably conditioned sludge (6) can also be used in the treatment of waste water (9) as a coagulant, replacing aluminium sulphate, aluminium polychloride, ferric chloride, etc., and as a neutraliser and former of insoluble hydroxides, replacing calcium or sodium hydroxide and calcium or sodium carbonate.

The sludge generated, also suitably conditioned, can be used in the removal of other compounds from water, such as the case of the metal boron.

Finally, it should be indicated that the mixture of C3A with specific amounts of sources of Ca can improve the precipitation of sulphates. For this reason, the detailed study of each specific case and the corresponding addition and mixture of lime with C3A may result in an improvement of the process. In turn, the reuse of the sludge obtained (ettringite) for the removal of sulphates is very beneficial in certain cases.

The nature of this invention as well as the way of putting it into practice has been sufficiently described so that any changes that do not alter, change or modify the fundamental principle are considered to be variations in detail only.

## Claims

1. Method for treating wastes containing sulphates and valorisation of the by-products obtained **characterised in that** it comprises a phase of adding modifiable amount of tricalcium aluminate (3CaO.Al2O3) to produce a main reaction (4), thereby removing the sulphates by precipitation and obtaining a by-product that includes the precipitate.

2. Method for treating wastes containing sulphates of claim 1 wherein it comprises a prior treatment phase (2) of such wastes (1) in which modifiable amounts of calcium hydroxide, calcium oxide and/or calcium carbonate are added before the main reaction (4) with tricalcium aluminate, obtaining a precipitate containing calcium sulphate or calcium sulphate hydrate.

3. Method for treating wastes containing sulphates of claim 1 wherein the by-product comprises a sludge (5) that contains ettringite.

4. Method for treating wastes containing sulphates of claim 3 wherein it comprises an additional phase of conditioning the sludge (5).

5. Method for treating wastes containing sulphates of claim 1 or claim 4 wherein it comprises the phase of adding the sludge in a mixture for the manufacture of cement (8).

6. Method for treating wastes containing sulphates of claim 1 or claim 4 wherein it comprises a phase of discharging the sludge as a coagulant in a waste water purification plant (9).

7. Method for treating wastes containing sulphates of claim 1 or claim 4 wherein it comprises the phase of discharging the sludge as a neutraliser in a waste water purification plant (9).
